Europäisches Patentamt

European Patent Office

Office européen des brevets

(19)

(11) **EP 1 193 780 A2**

(12) **EUROPÄISCHE PATENTANMELDUNG**

(43) Veröffentlichungstag:
**03.04.2002 Patentblatt 2002/14**

(51) Int Cl.⁷: $H01M\ 4/32$, $H01M\ 4/52$

(21) Anmeldenummer: **01116462.1**

(22) Anmeldetag: **07.07.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **09.08.2000 DE 10038789**

(71) Anmelder: **NBT GmbH
30419 Hannover (DE)**

(72) Erfinder: **Bäuerlein, Peter, Dr.
29690 Lindwedel (DE)**

(74) Vertreter: **Kaiser, Dieter Ralf, Dipl.-Ing.
Patentassessor,
Frankenallee 22
65779 Kelkheim (DE)**

(54) **Ni/Metallhydrid-Sekundärelement für Sekundärbatterie**

(57) Bei einem Ni/Metallhydrid-Sekundärelement mit einer positiven Nickelhydroxidelektrode, einer negativen Elektrode mit einer Wasserstoffspeicherlegierung und einem alkalischen Elektrolyten, enthält die mit einem dreidimensionalen metallischen Leitgerüst versehene positive Elektrode ein Nickelhydroxid, dessen Körner mit diskreten Partikeln aus metallischem Kupfer beschichtet sind. Die Masse der Beschichtung aus Kupfer beträgt 0.2 bis 15 Gew%, vorzugsweise 5 bis 10 Gew. % der Masse des Nickelhydroxids.

Die Beschichtung des Nickelhydroxidmaterials wird durch stromlose chemische Abscheidung in alkalischem Milieu vorgenommen.

Figur 3

EP 1 193 780 A2

Printed by Jouve, 75001 PARIS (FR)

**Beschreibung**

Die Erfindung betrifft ein Ni/Metallhydrid-Sekundärelement mit einer positiven Nickelhydroxidelektrode, einer negativen Elektrode, die eine Wasserstoffspeicherlegierung enthält, und einem alkalischen Elektrolyten sowie Verfahren zur Herstellung von positiven Elektroden für diese Sekundärelemente.

Nickelhydroxid ($Ni(OH)_2$) stellt das elektrochemisch aktive Material der positiven Elektrode von Nickel-Cadmium und Nickel-Metallhydrid-Batterien dar. Da zweiwertiges Nickelhydroxid keine elektronische Leitfähigkeit besitzt, werden im allgemeinen Leitmittel in Pulverform zugesetzt. Beim Verdichten der Massemischung bildet sich so ein dreidimensionales Leitgerüst, welches die Nickelhydroxidpartikel elektronisch anbindet. Bei Masseelektroden, wie sie in Knopfzellen Verwendung finden, mischt man dem Nickelhydroxid feines Nickelpulver zu, um eine leitfähige Masse zu erhalten. In Ni/Cd-Zellen fand früher Graphit als Leitmittel Verwendung, allerdings war dieser anfällig für oxidative Zerstörung. Bei Elektroden mit einem Metallfoamgerüst dient der Nickelschaum als Leitgerüst, in dessen Poren man eine wässrige Suspension, welche Nickelhydroxid enthält, füllt.

Aus dem Dokument EP 337029-B1 ist bekannt, dass man durch Zugabe von Kobaltverbindungen, wie CoO, $Co(OH)_2$ oder Co-Metall ein effizientes Leitgerüst aufbauen kann. Die eingesetzten Co-Verbindungen werden in der Zelle in elektrisch leitfähiges CoOOH überführt, welches, die $Ni(OH)_2$-Partikel elektrisch anbindet. Die Masseausnutzung einer positiven Masseelektrode läßt sich somit von ca. 200 mAh/g $Ni(OH)_2$ auf 250 mAh/g $Ni(OH)_2$ steigern. Das durch CoOOH errichtete Leitgerüst ist unter "normalen" Betriebsbedingungen stabil, d.h. solange sich die positive Elektrode im Potentialbereich oberhalb +350 mV vs. Hg/HgO befindet.

Fällt das Potential der positiven Elektrode unter 90 mV vs. Hg/HgO, so kann, insbesondere bei erhöhter Temperatur, die Reduktion des CoOOH stattfinden.

Fällt das Potential der positiven Elektrode unter -1.2 V vs. Hg/HgO, so kommt es zur Entwicklung von Wasserstoff an der positiven Elektrode, was zur irreversiblen Schädigung der positiven Elektrode führt. Derart niedrige Potentiale auf der positiven Elektrode können im Falle einer Tiefentladung auftreten. Besonders ungünstig ist es, wenn die Tiefentladung bei höheren Temperaturen erfolgt. Den Fall einer Tiefentladung bei höheren Temperaturen bildet der sogenannte HTSC-Test (HTSC-Test = High Temperature Short Circuit-Test) nach. Schließt man eine entladene, CoO-haltige NiMH-Zelle bei erhöhter Temperatur kurz, so bringt man die positive Elektrode auf das Potential der überdimensionierten negativen Elektrode, also circa -0.9 V vs. Hg/HgO. In diesem Fall verzeichnet man einen irreversiblen Kapazitätsverlust von 15 bis 25%, bedingt durch die Zerstörung des CoOOH-Leitgerüstes und gegebenenfalls der Zerstörung des Aktivmaterials.

Aus dem Dokument DE 44 37 787-A1 ist bekannt, dass man die Zerstörung des Leitgerüstes, welche sich nach einem HTSC-Test ergibt, dadurch vermindern kann, dass man der positiven Masse Kupfer in Form seiner Oxide oder Hydroxide und/oder in metallischer Form zusetzt. Als besonders vorteilhaft erwiesen sich Zusätze aus $Cu_2O$ und $Cu(OH)_2$.

Aus dem Dokument EP 0 896 376-A1 ist bekannt, dass eine Beschichtung der Nickelhydroxidpartikel mit einem Mischhydroxid aus $Co(OH)_2$ und $Cu(OH)_2$ den HTSC-Effekt deutlich reduziert. Der Vorteil einer Beschichtung ist, dass sich das wirksame Agens in idealer Nähe zum Wirkungsort, d.h. auf der Oberfläche des $Ni(OH)_2$-Korns, befindet.

Der Erfindung liegt die Aufgabe zugrunde, den Kapazitätsverlust eines Ni/Metallhydrid-Akkumulators nach Tiefentladung zu vermindern.

Diese Aufgabe wird bei einem Akkumulator der eingangs genannten Art durch die kennzeichnenden Merkmale des Anspruchs 1 gelöst. In den Unteransprüchen sind vorteilhafte Ausgestaltungen der Erfindung und Verfahren zur Herstellung einer erfindungsgemäßen positiven Elektrode beschrieben.

Durch das erfindungsgemäße Verfahren einer stromlosen Abscheidung von Kupfer auf der Oberfläche der Nickelhydroxidkörner werden leitfähige Kupferpartikel auf der Oberfläche der $Ni(OH)_2$-Partikel erzeugt. Dadurch wird eine zufällige, statistische Verteilung des Kupfers in der positiven Elektrodenmasse, wie in DE 44 37 787-A1 beschrieben, vermieden. Dadurch, dass die Oberfläche der $Ni(OH)_2$-Partikel mit einer Vielzahl von Kupferpartikeln und nicht durch eine undurchlässige Cu-Schicht bedeckt ist, können die elektrochemischen Reaktionen, welche bei Ladung und Entladung stattfinden, nicht gehemmt werden. Die erfindungsgemäße Kupferbeschichtung bzw. Aufbringung von Cu-Partikeln vermindern den Kapazitätsverlust nach Tiefentladung deutlich.

Die aus diskreten Partikeln gebildete elektrisch leitfähige Kupferschicht auf dem Nickelhydroxidkorn erfolgt insbesondere durch stromlose Abscheidung von Kupfer aus einer alkalischen, komplexierte Kupferionen enthaltenden Lösung mittels eines chemischen Reduktionsmittels.

Die Masse der Beschichtung aus Kupfer beträgt 0,2 bis 15 Gew.%, vorzugsweise 5 bis 10 Gew.% der Masse des Nickelhydroxids.

Aus der Beschichtungstechnik ist bekannt, dass ein metallischer Überzug auf nichtmetallischen Substraten (Isolatoren) nur nach einer Vorbehandlung der Substratoberfläche zu erreichen ist. In der Regel werden dazu durch an sich bekannte Prozesse Edelmetallkeime auf der Oberfläche des Isolators erzeugt, welche die kinetisch gehemmte Abscheidungsreaktion katalysieren.

Seit langem bekannt ist die Reduktion von $Cu^{2+}$ zu Cu mit Formaldehyd nach:

$$Cu^{2+} + HCHO + 3\ OH^- \rightarrow Cu + HCOO^- + 2\ H_2O$$

Das erfindungsgemäß verwendete alkalische Abscheidungsbad enthält durch Tartrationen komplexierte $Cu^{2+}$-Ionen. Die Komplexierung verhindert ein Ausfallen von Kupferhydroxid beim pH-Wert der Abscheidung. Als Reduktionsmittel dient Formaldehyd, welcher zu Formiat oxidiert wird. Man führt die Abscheidung in der Regel bei Raumtemperatur bis zur vollständigen Reduktion aller $Cu^{2+}$ Ionen durch.

Ein nach diesem Verfahren hergestelltes, mit metallischen Kupferpartikeln beschichtetes Nickelhydroxid wird vorteilhaft als aktives Material in einer positiven Elektrode eines Ni/Metallhydrid-Sekundärelements verwendet, da gewährleistet ist, dass wichtige Anforderungen wie Sitz des als Tiefentladeschutz verwendeten Kupfers am Wirkungsort, d.h. auf der Oberfläche des Korns eine optimale Verteilung des Kupfers und eine hohe Porosität der Schicht erfüllt werden. Während des Zyklisierens einer Elektrode mit diesen Eigenschaften wird ein Teil des metallischen Kupfers beim Laden der Zelle zu Kupfer(II)oxid bzw. —hydroxid oxidiert, welches in Form eines Hydroxokomplexes im Elektrolyten löslich ist. In der Zelle finden sich nun Reste metallischen Kupfers auf dem Nickelhydroxidkorn, Anteile von $Cu(OH)_2$ in der positiven Elektrode in der Nähe bzw. auf dem Nickelhydroxidkorn sowie in Form eines Hydroxokomplexes gelöste $Cu^{2+}$-Ionen im Elektrolyten. Bei einer Tiefentladung werden die genannten $Cu^{2+}$-Verbindungen an der positiven Elektrode wieder zu metallischem Kupfer reduziert. Im folgenden seien die ablaufenden Reaktionen am Beispiel der Reduktion von CuO formuliert.

$$CuO + H_2O + 2e^- \rightarrow Cu + 2\ OH^-$$

Ähnlich wie im Falle des CoOOH-Leitgerüstes läßt sich somit durch den Zusatz von Kupfer durch den Lösungs/Abscheidungsmechanismus (Auflösung von $Cu(OH)_2$, Abscheidung von Cu beim Tiefentladen) ein leitfähiges, dreidimensionales Netzwerk aus metallischem Kupfer aufbauen, welches insbesondere bei niedrigem Potential der positiven Elektrode stabil ist, bei höherem Potential und unter normalen Betriebsbedingungen hingegen abgebaut wird. Dies stellt eine ideale Ergänzung zum CoOOH-Leitgerüst dar, welches ebenfalls durch einen Auflösungs/Abscheidungsmechanismus (Auflösung von Co, bzw. CoO, Abscheidung von CoOOH bei Laden der Zelle) aufgebaut wird, im Gegensatz zum Cu-Leitgerüst jedoch unter normalen Betriebsbedingungen stabil ist, unter Tiefentladebedingungen jedoch abgebaut wird.

Ein erfindungsgemäßes mit Kupfer beschichtetes Nickelhydroxid wird wie folgt hergestellt:

Man suspendiert 100g (1.08 mol) sphärisches Nickelhydroxid zwei Minuten lang in einer Lösung von 2.50 g (11.1 mmol) Zinn(II)chlorid und 10 ml konz. Salzsäure (32 %ig) in 250 ml Wasser. Anschließend saugt man ab und wäscht dreimal mit 100 ml Wasser, bevor man trockensaugt.

Das so vorbehandelte sphärische Nickelhydroxid suspendiert man in 100 ml Wasser, diese Suspension wird anschließend mit einer Lösung von 250 mg (1.74 mmol) Palladium(II)chlorid und 100 µl konz. Salzsäure (32 %ig) in 400 ml Wasser versetzt. Man rührt zwei Minuten bei Raumtemperatur und saugt danach ab, wobei man ein farbloses Filtrat erhält, was auf die völlige Adsorption des Palladiums am Nickelhydroxid schließen läßt. Man wäscht anschließend dreimal mit 100 ml Wasser und saugt trocken.

In einem 2 l Dreihalskolben mit Rührer und Gasableitung löst man 39.2 g (157 mmol) Kupfer(II)sulfat-Pentahydrat in 1.3 l Wasser. Anschließend setzt man 133 g (471 mmol) Kalium-Natrium-Tartrat zu, bevor man 39.2 g (980 mmol) Natriumhydroxid einträgt. Die nunmehr tiefblaue Lösung versetzt man mit 100 ml einer 37%igen Formaldehydlösung. Anschließend trägt man unter heftigem Rühren 100 g (1.08 mol) vorbehandeltes Nickelhydroxid ein, sofort setzt eine heftige Reaktion ein und die Mischung schäumt kräftig auf, nach wenigen Minuten ist die Badlösung völlig entfärbt, das sich absetzende Nickelhydroxid ist nunmehr rötlich braun. Man dekantiert die überstehende, farblose Lösung ab, schlämmt den erhaltenen Niederschlag in 200 ml Wasser auf und saugt anschließend ab. Das beschichtete $Ni(OH)_2$ wäscht man sechsmal mit 100 ml Wasser, bevor man im Vakuumexsikkator über NaOH trocknet. Man erhält 105 g (105% bzgl. eingesetzten $Ni(OH)_2$'s) eines nach Trocknung nunmehr schwarzen Pulvers.

Die chemische Analyse des resultierenden Materials ergibt einen Gehalt an Kupfer von ca. 9%. Das Pulverdiffraktogramm weist neben den Linien für Nickelhydroxid intensive Signale bei $2\vartheta = 43.4°$ und $50.4°$ auf, welche auf metallisches Kupfer zurückzuführen sind. Außerdem finden sich bei $2\vartheta = 29.7°$, $36.5°$ und $61.3°$ Signale, welche $Cu_2O$ zuzuordnen sind. In REM-Aufnahmen sind $Ni(OH)_2$-Kugeln sichtbar, auf welche Kupferpartikel in Form kugelförmiger Agglomerate aufgewachsen ist. Der Widerstand des Materials wird an einem Preßling bei einem Druck von 20 kN/cm$^2$ nach fünf Minuten Preßdauer bei einer Frequenz von 1000 Hz ermittelt. Der spezifische Widerstand des beschichteten Nickelhydroxids p ergibt sich zu 5.9 Ω cm und ist damit um den Faktor $8 \times 10^6$ niedriger als der eines unbehandelten Nickelhydroxids.

Die verbesserten Tiefentladeeigenschaften durch Verwendung des erfindungsgemäßen Kupferbeschichteten Nickelhydroxids können beispielsweise in Knopfzellen mit Masseelektroden nachgewiesen werden. Die positive Elektrode enthält dabei entweder das erfindungsgemäße Nickelhydroxid oder zu Vergleichszwecken andere Nickelhydroxide. Die negative Elektrode besteht aus einer Wasserstoffspeicherlegierung der Zusammensetzung $LmNi_{3.6}Co_{0.7}Al_{0.4}Mn_{0.3}$, sowie 2% Ruß und 1% PTFE, die Masse beträgt 2.20 g. Als Elektrolyt dient 6.5 n KOH + 0.5n LiOH. Nach dem Zusammenbau der Zellen werden diese zunächst für drei Tage bei 45 °C gelagert. Anschließend werden sie für 15 h mit C/10 geladen bevor sie mit C/5 bis zu einer Entladeschlußspanung von 1.0 V entladen werden. Danach folgen 9 Zyklen mit einer 7stündigen Ladung mit C/5 und einer Entladung mit C/5 bis 1.0 V. Nach diesen Zyklen schließt man die entladenen Zellen über einen 2 Ohm Widerstand kurz und bewahrt sie für drei Tage bei 60 °C auf, HTSC-Test. Anschließend führt man weitere 5 Lade/Entlade-Zyklen mit C/5 aus. Aus der Kapazität vor dem HTSC-Test und der Kapazität danach, ergibt sich der HTSC-Verlust.

Beispiel 1 (B1):

Die positive Elektrode besteht aus 60% erfindungsgemäßem Cu-beschichtetem Nickelhydroxid, 10 % CoO und 30% Ni-Pulver. Die Gesamtmasse beträgt 1.80 g.

Vergleichsbeispiel 1 (V1):

Die positive Elektrode besteht aus 60% unbehandeltem Nickelhydroxid, 10 % CoO und 30% Ni-Pulver. Die Gesamtmasse beträgt 1.80 g.

Vergleichsbeispiel 2 (V2):

Die positive Elektrode besteht aus 63% Nickelhydroxid, 3 % CoO, 1% Co, 30% Ni-Pulver und 3% $Cu_2O$, gemäß DE 44 37 787-A1. Die Gesamtmasse beträgt 1.80 g.

Vergleichsbeispiel 3 (V3):

Die positive Elektrode besteht jeweils aus 65% eines mit einem Mischhydroxid aus Kobalt und Kupfer ($Co_{0.97}Cu_{0.03}(OH)_2$) beschichtetem Nickelhydroxid, 5 % CoO und 30% Ni-Pulver, gemäß EP 0 896 376. Die Gesamtmasse beträgt 1.80 g.

Die Messung eines Zyklovoltamogramms erfolgt an Presselektroden,die jeweils 30% Ni-Pulver als Leitmittel enthalten. Als positive Elektroden kommen Presselektroden gemäß Beispiel 1 (mit Cu) bzw. gemäß Vergleichsbeispiel 1 (ohne Cu) zum Einsatz. Die positive Presselektrode dient als Arbeitselektrode, Gegenelektroden sind zwei Ni-Bleche, als Bezugselektrode kommt eine Hg/HgO-Elektrode zum Einsatz. Die Vorschubgeschwindigkeit beträgt 0.1 mV/s.

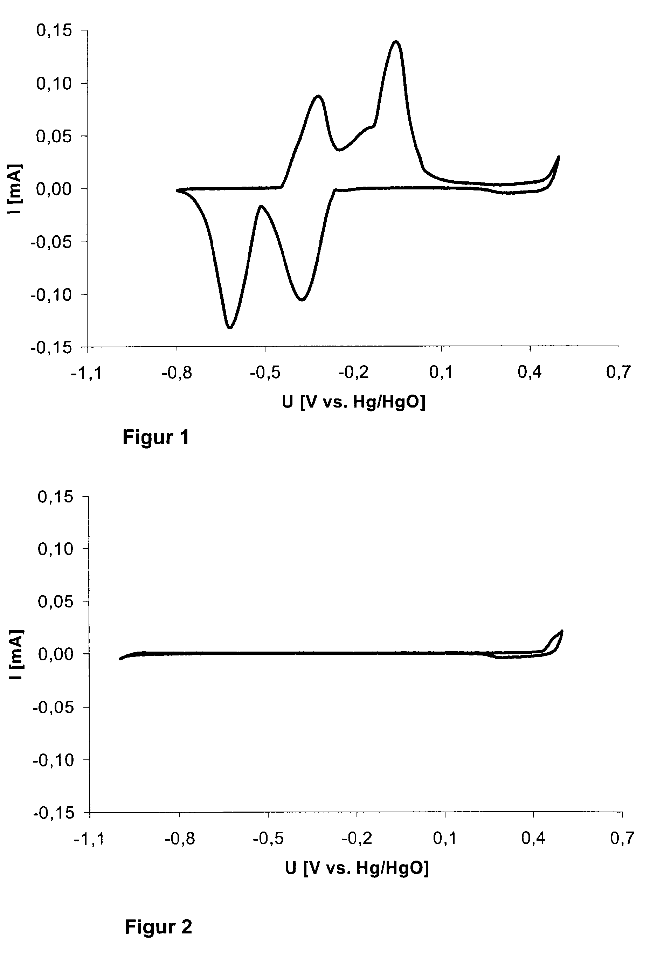

In den Figuren (Figur 1 mit Cu, Figur 2 ohne Cu) ist der jeweils 2. Scan abgebildet. Während des ersten Scans werden auf der positiven Elektrode $Cu^{2+}$-Verbindungen erzeugt, deren Reduktion und nachfolgende Oxidation im 2. Scan zu beobachten ist.

Aus Figur 1 ist ersichtlich, dass im Falle des Cu-beschichteten Nickelhydroxids bereits vor dem Erreichen des für die Entstehung von Wasserstoff an der positiven Elektrode notwendigen Potentials Redoxreaktionen stattfinden, welche auf die Reduktion der Cu-Beschichtung zurückzuführen sind. Im einzelnen dürfte es sich hierbei um die Reduktionsschritte Cu(II)→Cu(I) →Cu handeln.

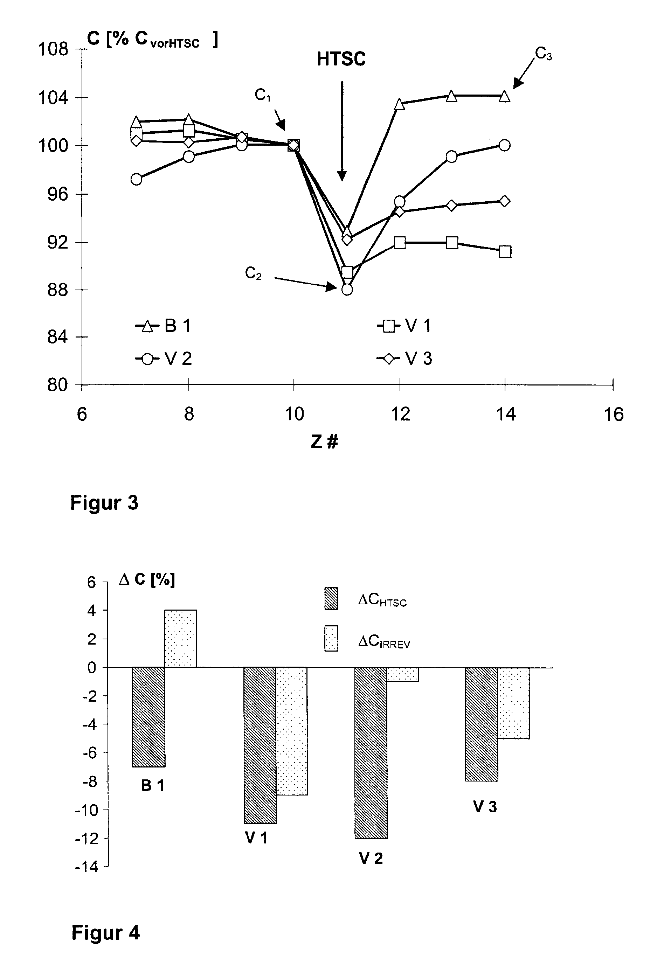

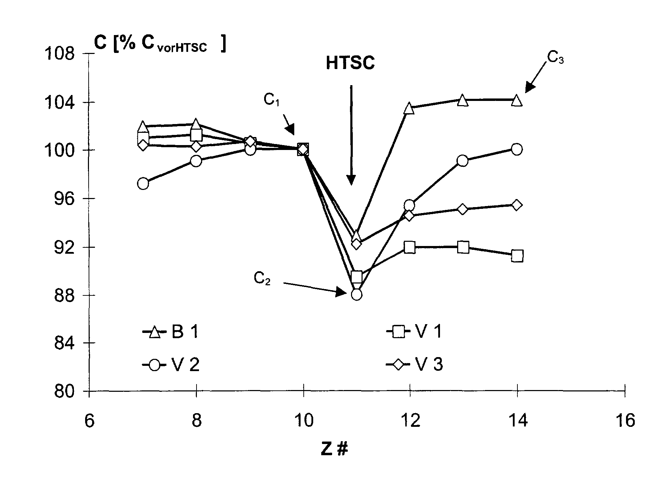

Setzt man die Kapazität einer Zelle vor der HTSC-Lagerung gleich 100% und bestimmt dann die Kapazität unmittelbar nach der HTSC-Lagerung, so erkennt man, dass die Zelle mit dem erfindungsgemäßen Nickelhydroxid mit 93% die höchste Kapazität aufweist. Der gesamte Verlust während der HTSC-Lagerung beträgt 7%, wie Tabelle 1 ausweist. Figur 3 zeigt die Abhängigkeit von Kapazität C von den Vergleichszellen, bezogen auf die Kapazität vor dem HTSC-Test in Abhängigkeit von der Zyklenzahl Z. Der Einsatz der HTSC-Lagerung ist durch den entsprechenden Pfeil in der Figur 3 angeordnet.

Tabelle 1:

| Nickelhydroxid | $C_1$ [%] | $C_2$ [%] | $C_3$ [%] | $\Delta C_{HTSC}$ [%] | $\Delta C_{irrev.}$ [%] |
|---|---|---|---|---|---|
| Beispiel 1 (B1) | 100 | 93 | 104 | -7 | +4 |
| Vergleich 1 (V1) | 100 | 89 | 91 | -11 | -9 |
| Vergleich 2 (V2) | 100 | 88 | 99 | -12 | -1 |

Tabelle 1:   (fortgesetzt)

| Nickelhydroxid | $C_1$ [%] | $C_2$ [%] | $C_3$ [%] | $\Delta C_{HTSC}$ [%] | $\Delta C_{irrev.}$ [%] |
|---|---|---|---|---|---|
| Vergleich 3 (V3) | 100 | 92 | 95 | -8 | -5 |

mit:

$C_1$:          Kapazität vor HTSC-Lagerung entsprechend 100%

$C_2$:          Kapazität unmittelbar nach HTSC-Lagerung

$C_3$:          regenerierte Kapazität 3 Zyklen nach HTSC-Lagerung

$\Delta C_{HTSC.}$:     gesamte Kapazitätsänderung während HTSC-Lagerung

$\Delta C_{irrev.}$:     nach HTSC-Lagerung bleibende, irreversible Kapazitätsänderung

Aus Tabelle 1 ist weiterhin zu entnehmen, dass sich die Zellen nach wenigen auf den HTSC folgenden Zyklen erholen und somit wieder etwas an Kapazität gewinnen. Eine Ausnahme bilden die Zellen mit erfindungsgemäßem Nickelhydroxid, diese weisen nach einigen Regenerationszyklen nach HTSC-Lagerung eine um ca. 4% höhere Kapazität als vor der HTSC-Lagerung auf. Bei allen Vergleichsbeispielen verbleibt ein irreversibler Kapazitätsverlust von 1 bis 9%. Dies ist Figur 4 zu entnehmen, die die Gesamtkapazitätsänderung $\Delta C_{HTSC}$ und die irreversible Kapazitätsänderung $\Delta C_{IRREV}$ bei den Beispielen darstellt.

Zellen mit dem erfindungsgemäß beschichteten Nickelhydroxid erreichen nach HTSC-Lagerung 104% der Kapazität vor Lagerung, sie weisen somit im Vergleich zu den genannten Vergleichsbeispielen die höchste Kapazität nach dem HTSC-Test auf, da während der HTSC-Lagerung ein Kupfer-Leitgerüst aufgebaut wird.

**Patentansprüche**

1. Ni/Metallhydrid-Sekundärelement mit einer positiven Nickelhydroxidelektrode, einer negativen Elektrode, die eine Wasserstoffspeicherlegierung enthält, und einem alkalischen Elektrolyten, **dadurch gekennzeichnet, dass** die mit einem dreidimensionalen metallischen Leitgerüst versehene positive Elektrode ein Nickelhydroxid enthält, dessen Körner mit diskreten Partikeln aus metallischem Kupfer beschichtet sind.

2. Ni/Metallhydrid-Sekundärelement nach Anspruch 1, **dadurch gekennzeichnet dass** die Masse der Beschichtung aus Kupfer 0.2 bis 15 Gew% der Masse des Nickelhydroxids beträgt.

3. Ni/Metallhydrid-Sekundärelement nach Anspruch 2, **dadurch gekennzeichnet dass** die Masse der Beschichtung aus Kupfer 5 bis 10 Gew% der Masse des Nickelhydroxids beträgt.

4. Ni/Metallhydrid-Sekundärelement nach einem der Ansprüche 1 bis 3, **dadurch gekennzeichnet dass** die Beschichtung mit Kupferpartikeln mittels eines chemischen Abscheideverfahrens erzeugt ist.

5. Verfahren zur Herstellung einer Nickelhydroxidelektrode für ein Mi/Metallhydrid Sekundärelement gemäß einem der Ansprüche 1 bis 3, **dadurch gekennzeichnet, dass** auf das Nickelhydroxidmaterial durch stromlose chemische Abscheidung in alkalischem Milieu Cu-Partikel aufgebracht werden.

6. Verfahren nach Anspruch 5, **dadurch gekennzeichnet, dass** die Abscheidung von Kupfer aus einer alkalischen, komplexierte Kupferionen enthaltenden Lösung mittels eines chemischen Reduktionsmittels erfolgt.

**Figur 1**

**Figur 2**

**Figur 3**

**Figur 4**